Europäisches Patentamt

European Patent Office

Office européen des brevets

(19)

(11) EP 0 832 473 B1

(12) EUROPEAN PATENT SPECIFICATION

(45) Date of publication and mention
of the grant of the patent:
**19.01.2005 Bulletin 2005/03**

(51) Int Cl.⁷: **G07D 1/06**, G07F 5/22,
G07F 19/00, G07G 1/00,
G07G 1/12, G07G 1/14

(21) Application number: **96916424.3**

(22) Date of filing: **30.05.1996**

(86) International application number:
**PCT/SE1996/000710**

(87) International publication number:
**WO 1996/038821 (05.12.1996 Gazette 1996/53)**

(54) **DEVICE FOR EXCHANGING INFORMATION BETWEEN A CASH REGISTER AND A PAYMENT-PROCESSING DEVICE**

VORRICHTUNG ZUM AUSTAUSCHEN VON AUSKÜNFTEN ZWISCHEN EINER REGISTRIERKASSE UND EINER ZAHLUNGSVERARBEITUNGSVORRICHTUNG

DISPOSITIF D'ECHANGE D'INFORMATIONS ENTRE UNE CAISSE ENREGISTREUSE ET UN DISPOSITIF DE TRAITEMENT DE PAIEMENT

(84) Designated Contracting States:
**AT BE CH DE DK ES FI FR GB GR IE IT LI LU MC NL PT SE**

(30) Priority: **30.05.1995 SE 9501983**

(43) Date of publication of application:
**01.04.1998 Bulletin 1998/14**

(73) Proprietor: **Cashguard AB**
**183 62 Täby (SE)**

(72) Inventors:
• **NORDQVIST, Leif**
**S-184 70 Akersberga (SE)**
• **TUREGARD, Karl-Willy**
**S-132 37 Saltsjö-Boo (SE)**
• **OLOFSSON, Gunnar**
**S-181 39 Lidingö (SE)**

(74) Representative: **Herbjörnsen, Rut**
**Albihns Stockholm AB**
**P.O. Box 5581**
**114 85 Stockholm (SE)**

(56) References cited:
EP-A- 0 266 911        EP-A- 0 448 050
EP-A- 0 627 714        WO-A-93/10511
US-A- 3 330 947

## Description

Background to the invention

In the retail trade it is known to use a cash register for keying in the prices of the goods which a customer is purchasing and also for keying in the amount which a customer has paid. According to the prior art, a cash register comprises means for calculating the total cost of the goods, also called the requested amount, and means for calculating the difference between the amount tendered and the requested amount.

According to the prior art, the cash register is coupled to a receipt printer. The cash register has a function for supplying information to the receipt printer so that the latter is able to print out a receipt. It additionally has a command function which activates the receipt printer. The cash register furthermore comprises a data processing unit for calculating, for example, the difference between the amount tendered and the requested amount, this unit functioning in compliance with software specially adapted for the cash register.

It is also known to couple to a cash register a device for processing the means of payment, this device being of the CashGuard type (registered trademark) which is described in WO 93/10511A and whose purpose is to process, i.e. receive and assess, banknotes and coins in a reliable manner. The object of this device is moreover to supply the correct amount of change and in this way to eliminate or reduce the risk of financial loss and/or the possibility of taking money which is not due. However, if this device for processing payment is to be able to perform its tasks, it needs to share the information which the cash register processes. An example of information of this kind is the requested amount.

According to the prior art, it is necessary to adapt the abovementioned software in the cash register in order to supply the correct information to the device processing the means of payment, and in order to ensure that the correct printouts are supplied from the cash register to the receipt printer.

The cash register and the device for processing the payment have been coupled together by connecting the latter directly to an interface in the cash register, which interface, depending on the manufacture and design of the cash register, it has been necessary to modify in order to obtain the desired function. This has been shown to be complicated and time-consuming since it has to be done for each model and manufacture of cash register which is to be used together with a payment-processing device. One is forced to make changes to the cash register's computer program, and this may require the assistance or the permission of the cash register manufacturer. In addition to this, today's cash registers are often built into a computer network, and this may mean that it is not possible for modifications or connections to be made without the entire checkout system having to be closed down.

EP 0 448 050 A discloses an electronic cash register which can be used with a range of different printers and display devices. This is achieved by providing the cash register controller with memory means for storing information on output formats required by the different output devices. The controller then selects the output formats according to the output devices that are connected. EP 0 627 714 A discloses an apparatus for settling transactions by card, comprising an input unit, a printer, a display and an automatic card reader. However, no provision is made for using different card readers with the apparatus or for using the card reader with different apparatuses.

Summary

The problem to be solved by the invention compared to the nearest prior art is to enable joining up of a payment-processing device to a cash register and to a display arrangement without making it necessary to make modifications to the cash register.

One object of the present invention is to make available a system for the processing of means of payment including a payment-processing device which can be joined up, in an advantageously simple way, to a cash register and its receipt printer.

Another object of the present invention is to produce a payment-processing device which can be joined up to different types of cash registers without it being necessary to make modifications to the cash register, either in relation to its hardware or to its software.

A further object of this invention is to produce a device which, in a simple and cost-effective way, can upgrade existing cash registers, and can also, at limited expense, increase the reliability of processing of the means of payment.

These objects, and other ones which are evident from the following description, are achieved by a signal-processing device according to the appended claim 1.

In another embodiment, the invention provides a system, for the processing of means of payment according to the appended claim 13.

Brief description of the drawings

In order to ensure that the present invention can be readily understood and implemented, it will be described by way of illustrative examples, with reference being made to the attached drawings in which:

Figure 1 shows a block diagram of a device according to the prior art;
Figure 2 shows a basic circuit diagram of an embodiment of the signal-processing device according to the present invention;
Figure 3 shows a flow chart of a first embodiment of a procedure according to the invention;

Figure 4 shows a flow chart of a second embodiment of the procedure;

Figure 5 shows a first embodiment of the system according to the present invention;

Figure 6 shows a second embodiment of the system according to the present invention;

Figure 7 shows a third embodiment of the system according to the present invention;

Figure 8 shows a fourth embodiment of the system according to the present invention;

Figure 9 shows a block diagram of a system for processing means of payment according to one embodiment;

Figure 10 shows a functional block diagram of the signal-processing unit 50.

Detailed description of the drawings

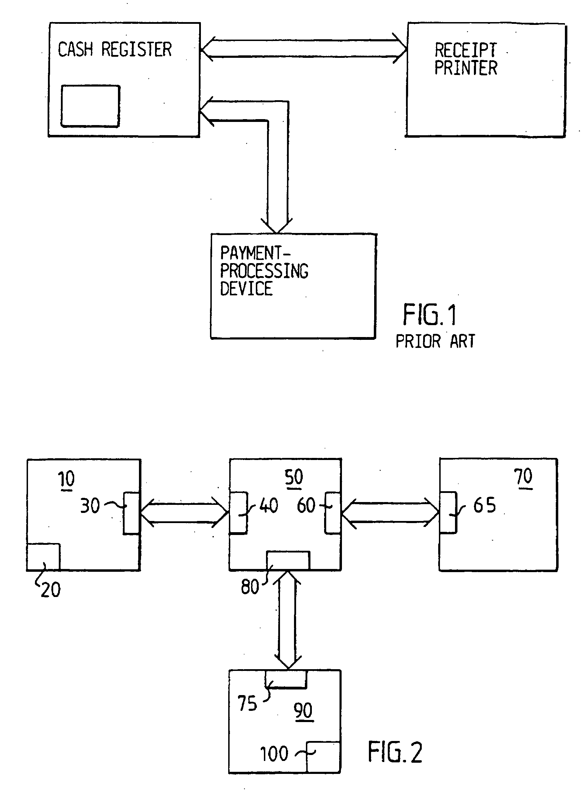

Figure 2 is a basic circuit diagram of an embodiment of the system.

A cash register 10 comprises members 20 for keying in data, for example price information, and a data port 30 for data communication. The cash register 10 is connected via the data port 30 to a first data port 40 of a signal-processing arrangement 50, hereinafter called the arrangement 50.

The arrangement 50 comprises a second data port 60 for communication with the display arrangement 70, and a third data port 80 for communication with a device 90 for processing the means of payment, hereinafter called the device 90.

The display arrangement 70 can consist of a printer such as a receipt printer. Alternatively, it can be a screen or a combination ofprinter and screen.

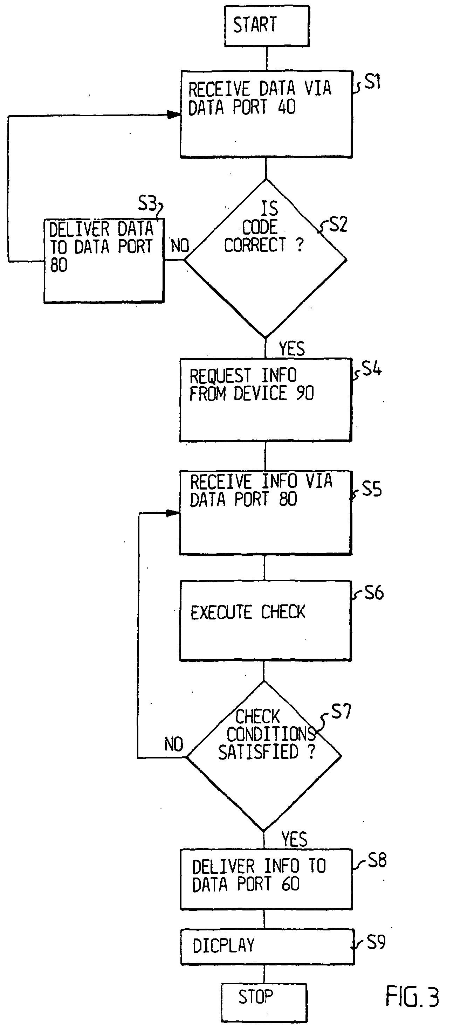

Figure 3 shows a flow chart of a procedure according to the invention. According to a first embodiment of the procedure, the latter comprises the stages of:

S1A    Generating a first data quantity as a function of information keyed into the cash register 10, and making available the first data quantity in coded form in accordance with a first predetermined code;

S1B    Delivering the first data quantity to the data port 40 via the data port 30;

S1C    Receiving data from the data port 40. This data can comprise text and/or numerals, such as price information together with associated goods designation and number, for example "Toothbrush, 2', at X kronor";

S2    Deciding if the received data indicates a predetermined event such as the event that all price information and all goods information have been entered. This predetermined event could be indicated by a predetermined indicator signal or by a predetermined message indicating "receipt finalized". This message, or indicator signal, is generated by a cash register 10 which is connected to the data port 40;

S3    In the case where the received data does not correspond to the predetermined message, conveying the said data onwards to the data port 60. The data which is supplied to the data port 60 is conveyed onwards to the display arrangement 70, in order to control the function thereof. This control data can include such information as, for example, numerals and/or text which is to be printed out, configuration and set-up of the information, and information on whether the transmitted information is to be displayed. Stage S1 then follows once again.

S4    In the case where the received data does correspond to the predetermined message, the arrangement 50 requests information concerning the actual value of the amount tendered. This value is generated by the device 90 as banknotes and/or coins are fed into the device 90. Alternatively, the actual value of the amount tendered can be generated by means of a card reader which reads an account card in a well known manner;

S5    Receiving information on the tendered amount from the device 90 via the data port 80;

S6    Checking the information. This check can include a calculation of whether the ratio between the amount tendered and the requested amount satisfies certain conditions;

S7    In the case where the check conditions have not been satisfied, stage S5 must be repeated. If the check conditions are satisfied, information concerning the requested amount and information concerning the amount tendered will be supplied to the data port 60 (stage S8);

S9    When this stage in the procedure is reached, the data which has been received from the data port 40 has been treated in accordance with the stages described above, which means that a secure payment for goods has been obtained at the device 90. The arrangement 50 controls the display arrangement 70 so that the latter displays selected information.

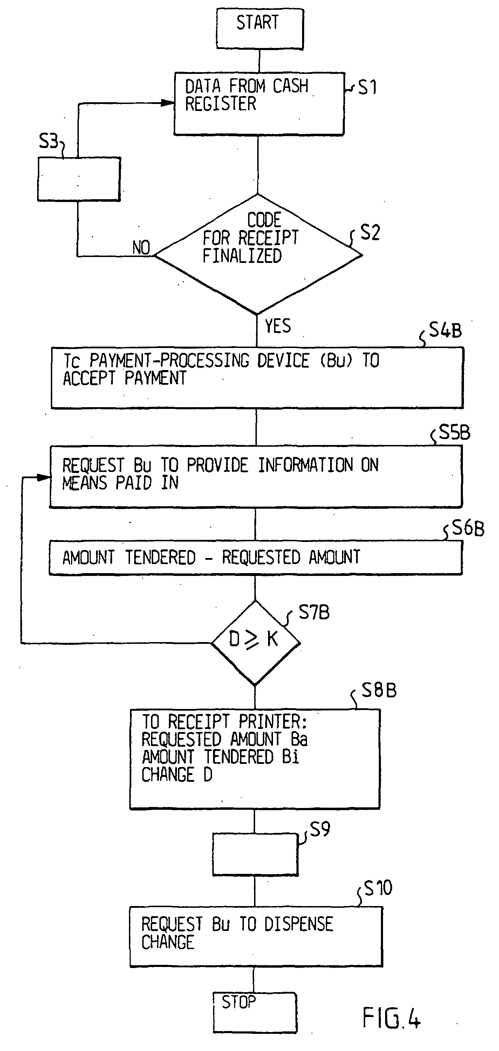

A second embodiment of the procedure is illustrated in Figure 4. According to the second embodiment, the first stages correspond to the above-described stages S1A, S1B, S1C, S2 and S3.

The predetermined message which is checked in stage S2 is the message indicating receipt finalized, i.e. a confirmation from the cash register that the price information for all the goods a customer wishes to purchase has been keyed in. When, in stage S2, the predetermined message has been received and has been found to be correct, the stages carried out according to the second embodiment are:

S4B    Sending a message to the device 90 for processing the means of payment, with an instruction to request that the operator feed in the means of payment.

Stages S5B and S6B are then carried out.

In stage S5B the device 90 generates a request signal to an operator to the effect that means of payment need to be fed in. This signal can be displayed via a display member 100 arranged on the device 90. According to one variant of the invention, the request signal is delivered to the display arrangement 70 in order thereby to draw the operator's attention to the fact that means of payment need to be fed in.

According to the second embodiment, the stage S6B comprises calculating a difference D between the amount tendered $B_i$ and the requested amount $B_a$.

$$D = B_i - B_a.$$

According to the second embodiment of the procedure, the difference D is compared with a preset value K. The value K determines what difference D can be accepted between the amounts $B_i$ and $B_a$.

According to one variant of the invention, the variable K has the value zero, and the criterion for the check stage S7b is that D be greater than or equal to K.

If the variable K has the preset value zero, this check stage means that the amount tendered must be greater than or equal to the requested amount if the device 90 is to be able to dispense any money. This provides the advantageous effect of limiting the amount of money dispensed to a value lower than or equal to the amount received. Thereby financial losses, due to the wrong amount of change being handed out, are eliminated

The stage S8B is performed if the above-described checking criteria have been satisfied. In stage S8B, information, such as amount tendered $B_i$, requested amount $B_a$ and the difference D, is delivered to the display arrangement 70 via the data port 60.

After stage S8B, the above-described stage S9 is carried out.

S10　　After stage S9, the arrangement 50 generates a proceed signal which is delivered to the device 90.

On receiving the proceed signal, the device 90 carries out the measures which are needed for dispensing money amounting to a sum corresponding to the difference D. In addition, a counter mechanism which is internal to the payment-processing device 90, and which counts the tendered amounts relating to the current transaction, can be reset so that a new function cycle can be begun.

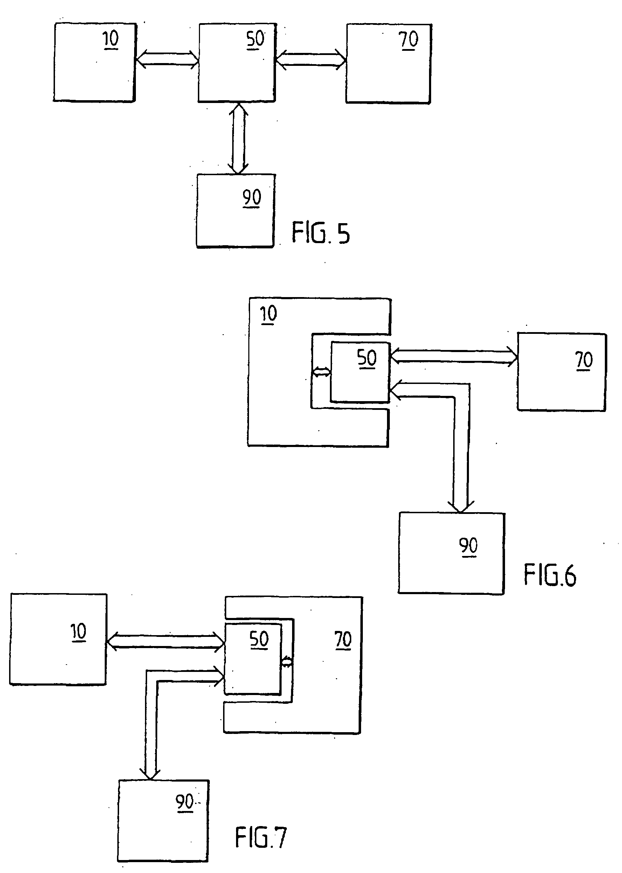

According to a first embodiment of the invention, which is shown in Figure 5, the signal-processing unit 50 constitutes an individual unit which is physically separate from a cash register 10, a display arrangement 70 and a device 90 for processing payment means.

The second, third and fourth embodiments, which are shown in Figures 6, 7 and 8, respectively, show how the signal-processing unit 50 is an integrated part of, respectively, the cash register 10, the display arrangement 70 and the payment-processing device 90.

According to one version of the invention, which is useful at least in the embodiments shown in Figures 5, 7 and 8, the signal-processing device 50 emulates the communications interface of a display arrangement, such as a receipt printer 70. Hence, the communication between the device 50 and the device 10 is performed such that messages or signals may be transmitted in both directions.

Figure 9 shows a block diagram of a system for processing payment means according to one embodiment. The system comprises a data input unit 20 which is integrated in the cash register 10. The data input unit 20 is intended for keying in a first data quantity, from which data quantity the first numerical value Ba can be calculated.

The data input unit 20 is arranged to provide the first data quantity in coded form; according to a first predetermined code, to the data port 30 of the cash register. The term "first predetermined code" includes the manner and the order of delivery of the price information, the goods designation and the number of items of the goods. One type of input unit 20 may present the information in accordance to one specific code, while another type of cash register provides the same information in accordance to another specific code.

The first predetermined code may also be defined as the manner of transmission of the information which is supplied to the data port 40. Moreover the predetermined message indicating receipt finalized from the cash register 10 may differ from one type of cash register to another.

The system moreover comprises a storage member 200 which is integrated in the device 90 for processing payment means and which is used for storing the payment means, such as banknotes and coins. These payment means are arranged in the storage member 200 in a theft-proof manner and can be removed from the storage member only by means of a dispensing member 220 in compliance with a dispense signal.

The device 90 comprises at least one input unit 210 for feeding payment means into the storage member 200.

The input unit for payment means comprises a detector means 230 for generating a second numerical value Bi as a function of the payment means which are fed in. The second numerical value Bi corresponds to the amount of money tendered by a customer at the checkout point to which the device 90 is coupled.

The system moreover comprises a signal-processing arrangement 50 comprising a control means which is arranged to generate the dispense signal as a function of the first numerical value, i.e. the requested amount Ba, and the second numerical value, i.e. the amount tendered Bi. The control means comprises a first memory element 240 in which at least one selectable program routine is stored in a memory segment 250.

A second selectable program routine is stored in a second memory segment 260. A computer unit 270 is arranged to operate in accordance with the selected program routine. The memory element 240 can comprise a plurality of program routines, with each of the program routines being adapted so as to cause the computer unit to interpret the first data quantity in accordance with their respective specific codes. To set up the device 50 for communication with a specific type of cash register, a program routine is chosen which is adapted for this purpose. Thereby the signal-processing device 50 can be joined up to different types of cash registers and to different types of display arrangements in an advantageously simple way.

The program routine can be selected by using a selector member 280 which can communicate with the computer unit 270. The selector member can comprise an array of hardware switches which can be set to the desired position by an operator. Alternatively, the selection can be made automatically on joining up the arrangement 50 to a cash register 10 or to a display member 70.

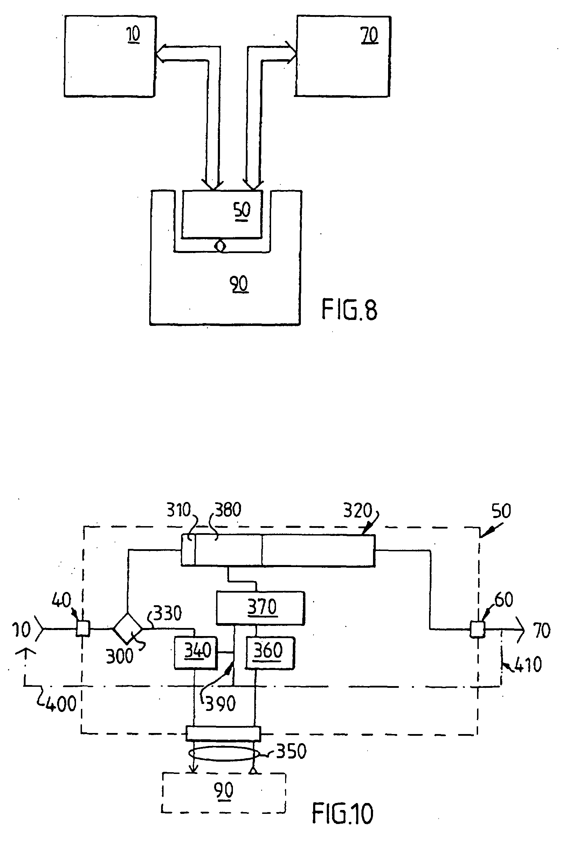

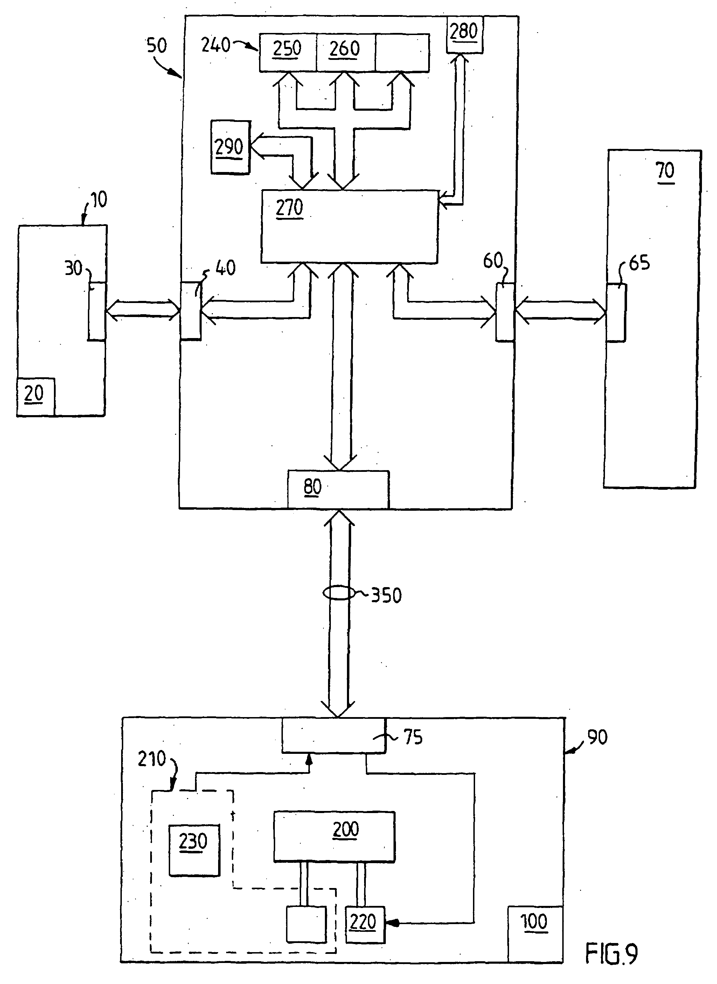

The arrangement 50 also comprises a memory element 290 for temporary storage of a predetermined number of messages constituting a part of the first data quantity. The signal-processing device 50 cooperates with the memory element 290, in accordance with instructions recorded in the memory 290, to control the communication between the cash register 10, the payment-processing device 90 and the display arrangement 70. The computer unit 270 is arranged to operate in accordance with the selected program routine such that the computer unit 270 in cooperation with the memory element 290 and the data ports 40, 60 and 80 at least temporarily stores a received message until the next consecutive message is received on data port 40. The resulting function of the signal-processing device 50 is described in connection with Figure 10 below.

Figure 10 shows a functional block diagram of the signal-processing device 50. A first data quantity which is received from the port 40 passes through a detector means 300 which has the task of reading off data and detecting the data message 310 for receipt finalized.

The first data quantity comprises one or more messages or data sets. Each data set can comprise a character combination and one or more digits. The character combination can be, for example, a goods description, and the digits can represent quantity information and/or price information.

As long as the message indicating receipt finalized 310 does not appear, all data are conveyed onwards via a data buffer 320 to the data port 60. The data buffer 320 may, in physical embodiment, comprise a micro processor cooperating with a memory element 290 as described in connection with Figure 9 above.

A receipt printer 70 can be coupled to the data port 60. The receipt printer 70 provides printouts of the data coming from the data port 60.

The data buffer 320 stores an arbitrary quantity of the data received from the port 40 in accordance with the "first in, first out" principle, and then delivers the information to the data port 60. Data destined for the receipt printer 70 is thereby initially delayed, but for such a short time that this does not affect the processing or the function of the cash register 10, and for a time which is sufficiently long for the signal-processing unit 50 to have the opportunity to process the data located in the buffer 320. A second data quantity is generated during this processing, and the final printout is thus manipulated.

When the detector means 300 detects the data code for receipt finalized 310, the receipt printer 70 is stopped instantaneously, after which a detection signal 330 is generated by the detector 300 and is delivered to a transmitter unit 340 which, via a data bus 350, delivers a request signal which requests the payment-processing device 90 to deliver information concerning the amount tendered Bi.

On receiving this request signal, the device 90 delivers information concerning the tendered amount Bi via the data bus 350 to a receiving unit 360. The receiving unit 360 and the transmitter unit 340 are included in the data port 80.

A calculating unit 370 calculates the difference D between the amount Bi from the device 90 processing the payment means, and the requested amount Ba delivered from the cash register 10. The requested amount Ba is located in the data buffer. The requested amount Ba is located in the first data quantity among the data which arrived at the buffer 320 before the data code for receipt finalized 310. This data set comprises a reference which is usually "subtotal" or "total", and a figure corresponding to the requested amount Ba.

If the amount Bi which is paid into the payment-processing device 90 is greater than or equal to the requested amount Ba from the cash register 10, the receipt will be finalized by supplying an information quantity 380 into the data buffer 320. The information quantity 380 is supplied ahead of the data code for receipt finalized 310. This information quantity 380 is preferably data sets comprising texts and values of the requested amount Ba, the amount tendered Bi and any change to be returned D. This information quantity 380 and the data code for receipt finalized 310 constitute the concluding part of the second data quantity. When the whole of the second data quantity has been delivered to the data port 60, the receipt printer 70 is instructed to execute the final printout and finalize the receipt.

The calculating unit 370 generates a signal 390 as a function of the finalizing of the receipt, which signal 390 is delivered via the transmitting unit 340 to the payment-processing device 90 which is requested to pay out any difference D as change if the difference D is greater than zero. A counter mechanism which is internal to the payment-processing device 90 and is used for payments relating to the current transaction can then be reset so that a new function cycle can be begun.

If the response Bi from the payment-processing device 90 does not come to the requested amount, the transmitting unit 340 of the arrangement 50 delivers, according to one embodiment, a request signal to the payment-processing device 90. As a function thereof, the payment-processing device 90 communicates the message that further payment is required.

The receipt printer 70 will finalize the receipt only when it receives the code for receipt finalized 310. This does not occur until the payment comes to at least the amount requested by the cash register 10. The cash register 10 can also receive a wait signal 400 from the receipt printer 70 via a bus 410. Alternatively, the wait signal can be generated by the calculating unit 370 and is delivered to the cash register. The wait signal indicates that the printout is not yet ready, which can prevent the cash register 10 from beginning to register new entries in a new transaction corresponding to a new receipt.

**Claims**

1. A signal-processing device (50) comprising:

   a first data port (40) for communication with a cash register (10);
   a second data port (60) for communication with a display arrangement (70);
   a third data port (80) for communication with a payment-processing device (90) adapted to receive and assess means of payment, such as banknotes and coins, and to supply correct amount of change;
   means (270; 300) for receiving a first message at the first data port; said first message comprising text and/or numerals, such as price information, goods designation and number of items of the goods;
   control means (270; 370) for generating a second message concerning a requested amount of payment (Ba) as a function of the first message;
   means (270; 320) for transmitting the second message in a predetermined manner to the second data port for communication with said display arrangement (70);

   means (270, 290; 360) for receiving a third message on the third data port (80); said third message comprising information concerning a tendered amount of payment (Bi);
   means (270; 290; 370) for generating an information quantity (380) as a function of the contents of the second and third messages (Ba, Bi);
   the control means (270; 370) operating to deliver the generated information quantity (380) to the second data port (60) for communication to said display arrangement (70); and
   a first memory means (240) for storing a selectable computer program routine (250, 260, ..), wherein
   the control means includes a processor unit (270) set up to operate according to the computer program routine (250, 260, ..), wherein the computer program routine causes the processor unit (270) to interpret the first messages in accordance with a specific code.

2. A signal-processing device (50) according to claim 1, **characterised in that**
   the control means operates to calculate a first numerical value (Ba) in response to the first messages or wherein one of the first messages is a first numerical value (Ba) which is the result of a calculation in response to the preceding first messages;
   the control means operates to deliver a request signal on the third data port (80) in response to detection of a first message (310) indicating the end of a stream of first messages; and wherein
   the control means operates to await said third message after having delivered the request signal.

3. Signal-processing device according to claim 2, wherein
   the control means, when receiving the third message including a second numerical value (Bi), operates to calculate a difference (D) between the second numerical value (Bi) and the first numerical value (Ba).

4. Signal-processing device (50) according to claim 3, wherein:

   the control means operates to perform a check stage including a comparison of the the difference (D) with a predetermined value (K) such that if the checking criteria have been satisfyed the control means delivers a proceed signal to the third data port (80).

5. Signal-processing device (50) according to claim 3 or 4, wherein :

   the control means operates to include the first numerical value (Ba) and the second numerical value (Bi) in the generated information quantity (380); and

wherein the control means operates to deliver the generated information quantity (380) to the second data port prior to delivering a second message indicating the end of a stream of second messages.

6. Signal-processing device (50) according to claim 2, wherein :

the control means operates to generate a second message indicating the end of a stream of second messages in response to the first message indicating the end of a stream of first messages.

7. Signal-processing device (50) according to claim 6, wherein:

the first memory means (240) comprises a plurality of individually selectable computer program routines (250, 260, ..), one of the program routines being adapted such that in operation the selected routine causes the computer unit to interpret the first messages in accordance with one specific code, another one of the program routines being adapted such that in operation the selected routine causes the computer unit to interpret the first messages in accordance with another specific code.

8. A system comprising:

a signal-processing device (50) according to any of claims 1 to 7;
a cash register (10) communicatively coupled to said first data port (40);
a display arrangement (70) communicatively coupled to said second data port (60);
a payment-processing device (90) communicatively coupled to said third data port (80).

9. The system according to claim 8, wherein the signal-processing device (50) constitutes an individual unit which is physically separate from said cash register (10), said display arrangement (70) and said payment-processing device (90).

10. The system according to claim 8, wherein the signal-processing device (50) is an integrated part of the cash register (10).

11. The system according to claim 8, wherein the signal-processing device (50) is an integrated part of said display arrangement (70).

12. The system according to claim 8, wherein the signal-processing device (50) is an integrated part of said payment-processing device (90).

13. A system for the processing of means of payment, comprising:

a data input unit (10, 20) for inputting of a first data quantity, from which data quantity a first numerical value (Ba) representing an amount requested can be calculated, the data input unit (10, 20) being arranged to provide the first data quantity according to a specific code;
a payment-processing device (90) comprising a storage member (200) which is used for storing means of payment, such as banknotes and coins, said payment-processing device (90) comprising:

at least one input unit (210) for feeding means of payment into the storage member (200), the input unit comprising a detector means for generating a second numerical value (Bi) as a function of the payment means which are fed in; and
at least one dispensing unit (220) for dispensing means of payment from the storage member (200); and

a signal-processing device (50) which is arranged to generate a dispense signal as a function of the first numerical value (Ba) and the second numerical value (Bi); wherein
said payment-processing device (90) is functionally connected to the data input unit (10, 20) via said signal-processing device (50); and
the dispensing unit (220) is arranged to dispense means of payment from the storage member (200) as a function of said dispense signal;
the signal-processing device (50) comprising:

a first memory element (240) in which at least one selectable computer program routine (250, 260) is stored; and
a computer unit (270) which is arranged to operate in accordance with a selected program routine, the selected program routine being adapted so as to cause the computer unit to interpret the first data quantity in accordance with said specific code.

14. The system according to Claim 13, which system comprises a display arrangement (70) which is functionally connected to the control means and is used for displaying a second data quantity.

15. The system according to Claim 14, in which the computer unit is arranged to generate the second data quantity as a function of the first data quantity.

16. The system according to Claim 14, in which the storage member comprises a data processing unit which comprises a status-monitoring unit for generating a status signal indicating the status of the storage member; and the data processing unit is arranged to generate the second data quantity as a function of the status signal.

17. The system according to any of Claims 14, 15 and 16, in which the display arrangement is arranged to receive display information coded according to a second predetermined code, which second code can be differentiated from said specific code.

**Patentansprüche**

1. Signalverarbeitungsvorrichtung (50), die aufweist:

   - einen ersten Datenport (40) zur Kommunikation mit einer Registrierkasse (10);

   - einen zweiten Datenport (60) zur Kommunikation mit einer Anzeigeanordnung (70);

   - einen dritten Datenport (80) zur Kommunikation mit einer Zahlungsverarbeitungsvorrichtung (90), die dazu geeignet ist, Zahlungsmittel, wie beispielsweise Banknoten und Münzen, zu empfangen und zu bestimmen und einen richtigen Betrag an Wechselgeld bereitzustellen;

   - eine Einrichtung (270; 300) zum Empfangen einer ersten Nachricht an dem ersten Datenport, wobei die erste Nachricht Text und/oder Ziffern, wie beispielsweise eine Preisinformation, eine Warenbezeichnung und eine Stückzahl der Ware, aufweist;

   - eine Steuereinrichtung (270; 370) zum Erzeugen einer zweiten Nachricht bezüglich eines angeforderten Zahlungsbetrags ($B_a$) in Abhängigkeit der ersten Nachricht;

   - eine Einrichtung (270; 320) zum Übertragen der zweiten Nachricht in einer vorbestimmten Art und Weise an den zweiten Datenport zur Kommunikation mit der Anzeigeanordnung (70);

   - eine Einrichtung (270, 290; 360) zum Empfangen einer dritten Nachricht an dem dritten Datenport (80), wobei die dritte Nachricht Information bezüglich eines überreichten Zahlungsbetrages (Bi) aufweist;

   - eine Einrichtung (270; 290; 370) zum Erzeugen einer Informationsmenge (380) in Abhängigkeit der Inhalte der zweiten und dritten Nachrichten ($B_a$, $B_i$), wobei

      - die Steuereinrichtung (270; 370) arbeitet, um die erzeugte Informationsmenge (380) an den zweiten Datenport (60) zur Kommunikation mit der Anzeigeanordnung (70) zu übermitteln; und

   - eine erste Speichereinrichtung (240) zum Speichern einer wählbaren Computerprogrammroutine (250, 260,...), wobei

      - die Steuereinrichtung eine Prozessoreinheit (270) beinhaltet, die dafür vorgesehen ist, gemäß der Computerprogrammroutine (250, 260,...) zu arbeiten, wobei die Computerprogrammroutine bewirkt, dass die Prozessoreinheit (270) die ersten Nachrichten gemäß eines spezifischen Codes auswertet.

2. Signalverarbeitungsvorrichtung (50) nach Anspruch 1, *dadurch gekennzeichnet, dass*

   - die Steuereinrichtung arbeitet, um einen ersten Zahlenwert ($B_a$) als Reaktion auf die ersten Nachrichten zu berechnen, oder

   - eine der ersten Nachrichten ein erster Zahlenwert ($B_a$) ist, der das Ergebnis einer Berechnung als Reaktion auf die vorhergehenden ersten Nachrichten ist;

   - die Steuereinrichtung arbeitet, um ein Anfragesignal als Reaktion auf eine Erfassung einer ersten Nachricht (310), die das Ende eines Datenstroms von ersten Nachrichten anzeigt, an den dritten Datenport (80) zu übermitteln; und

   - die Steuereinrichtung arbeitet, um die dritte Nachricht abzuwarten, nachdem sie das Anfragesignal übermittelt hat.

3. Signalverarbeitungsvorrichtung nach Anspruch 2, *wobei* die Steuereinrichtung, wenn sie die dritte Nachricht empfängt, die einen zweiten Zahlenwert ($B_i$) beinhaltet, arbeitet, um eine Differenz (D) zwischen dem zweiten Zahlenwert (Bi) und dem ersten Zahlenwert ($B_a$) zu berechnen.

4. Signalverarbeitungsvorrichtung (50) nach Anspruch 3, *wobei* die Steuereinrichtung arbeitet, um eine Überprüfungsphase durchzuführen, die einen derartigen Vergleich der Differenz (D) mit einem vorbestimmten Wert (K) beinhaltet, dass die Steuereinrichtung ein Fortsetzungssignal an den dritten Port (80) übermittelt, wenn die Überprüfungsbedingungen erfüllt worden sind.

5. Signalverarbeitungsvorrichtung (50) nach Anspruch 3 oder 4, *wobei*

   - die Steuereinrichtung arbeitet, um den ersten Zahlenwert ($B_a$) und den zweiten Zahlenwert ($B_i$) in die erzeugte Informationsmenge (380) aufzunehmen; und

   - die Steuereinheit arbeitet, um die erzeugte Informationsmenge (380) vor der Übermittlung einer zweiten Nachricht, die das Ende eines Datenstroms von zweiten Nachrichten anzeigt, an den zweiten Datenport zu übermitteln.

6. Signalverarbeitungsvorrichtung (50) nach Anspruch 2, wobei die Steuereinrichtung arbeitet, um eine zweite Nachricht, die das Ende eines Datenstroms von zweiten Nachrichten anzeigt, als Reaktion auf die erste Nachricht, die das Ende eines Datenstroms von ersten Nachrichten anzeigt, zu erzeugen.

7. Signalverarbeitungsvorrichtung (50) nach Anspruch 6, *wobei* die erste Speichereinrichtung (240) eine Mehrzahl von individuell wählbaren Computerprogrammroutinen (250, 260,...) aufweist, wobei eine der Programmroutinen dazu ausgelegt ist, dass die gewählte Routine während eines Betriebes bewirkt, dass die Computereinheit die ersten Nachrichten gemäß eines spezifischen Codes auswertet, und eine andere der Computerroutinen dazu ausgelegt ist, dass die gewählte Routine während eines Betriebes bewirkt, dass die Computereinheit die ersten Nachrichten gemäß eines anderen spezifischen Codes auswertet.

8. System, das aufweist:

   - eine Signalverarbeitungsvorrichtung (50) nach einem der Ansprüche 1 bis 7;

   - eine Registrierkasse (10), die kommunikativ mit dem ersten Datenport (40) verbunden ist;

   - eine Anzeigeanordnung (70), die kommunikativ mit dem zweiten Datenport (60) verbunden ist; und

   - eine Zahlungsverarbeitungsvorrichtung (90), die kommunikativ mit dem dritten Datenport (80) verbunden ist.

9. System nach Anspruch 8, wobei die Signalverarbeitungsvorrichtung (50) eine einzelne Einheit bildet, die physikalisch von der Registrierkasse (10), der Anzeigeanordnung (70) und der Zahlungsverarbeitungsvorrichtung (90) getrennt ist.

10. System nach Anspruch 8, *wobei* die Signalverarbeitungsvorrichtung (50) ein integriertes Teil der Registrierkasse (10) ist.

11. System nach Anspruch 8, wobei die Signalverarbeitungsvorrichtung (50) ein integriertes Teil der Anzeigeanordnung (70) ist.

12. System nach Anspruch 8, wobei die Signalverarbeitungsvorrichtung (50) ein integriertes Teil der Zahlungsverarbeitungsvorrichtung (90) ist.

13. System für die Verarbeitung von Zahlungsmitteln, das aufweist:

    - eine Dateneingabeeinheit (10, 20) zum Eingeben einer ersten Datenmenge, von der ein erster Zahlenwert ($B_a$), der einen angeforderten Betrag darstellt, berechnet werden kann, wobei die Dateneingabeeinheit (10, 20) angeordnet ist, um die erste Datenmenge gemäß eines spezifischen Codes vorzusehen;

    - eine Zahlungsverarbeitungsvorrichtung (90), die ein Speicherelement (200) aufweist, das zum Speichern von Zahlungsmitteln, wie beispielsweise Banknoten und Münzen, verwendet wird, wobei die Zahlungsverarbeitungsvorrichtung (90) aufweist:

      - wenigstens eine Eingabeeinheit (210) zur Zahlungsmitteleingabe in das Speicherelement (200), wobei die Eingabeeinheit eine Erfassungseinrichtung zum Erzeugen eines zweiten Zahlenwerts ($B_i$) in Abhängigkeit der eingegebenen Zahlungsmittel aufweist, und

      - wenigstens eine Ausgabeeinheit (220) zur Zahlungsmittelausgabe von dem Speicherelement (200); und

    - eine Signalverarbeitungsvorrichtung (50), die angeordnet ist, um ein Ausgabesignal in Abhängigkeit des ersten Zahlenwerts ($B_a$) und des zweiten Zahlenwerts (Bi) zu erzeugen; wobei

    - die Zahlungsverarbeitungsvorrichtung (90) über die Signalverarbeitungsvorrichtung (50) funktionell mit der Dateneingabeeinheit (10, 20) verbunden ist, und

    - die Ausgabeeinheit (220) angeordnet ist, um Zahlungsmittel von dem Speicherelement (200) in Abhängigkeit des Ausgabesignals auszugeben; wobei

- die Signalverarbeitungsvorrichtung (50) aufweist:

  - eine erstes Speicherelement (240), in dem wenigstens eine wählbare Computerprogrammroutine (250, 260) gespeichert ist, und

  - eine Computereinheit (270), die angeordnet ist, um gemäß einer gewählten Programmroutine zu arbeiten, wobei die gewählte Programmroutine dazu ausgelegt ist, um zu bewirken, dass die Computereinheit die erste Datenmenge gemäß dem spezifischen Code auswertet.

**14.** System nach Anspruch 13, *wobei* das System eine Anzeigeanordnung (70) aufweist, die funktionell mit der Steuereinrichtung verbunden ist und zum Anzeigen einer zweiten Datenmenge verwendet wird.

**15.** System nach Anspruch 14, wobei die Computereinheit in dem System angeordnet ist, um die zweite Datenmenge in Abhängigkeit der ersten Datenmenge zu erzeugen.

**16.** System nach Anspruch 14, *wobei*

- das Speicherelement in dem System eine Datenverarbeitungseinheit aufweist, die eine Statusüberwachungseinheit zum Erzeugen eines Statussignals aufweist, das den Status des Speicherelements anzeigt, wobei die Datenverarbeitungseinheit in dem System angeordnet ist, um die zweite Datenmenge in Abhängigkeit des Statussignals zu erzeugen.

**17.** System nach einem der Ansprüche 14 bis 16, *wobei* die Anzeigeanordnung in dem System angeordnet ist, um Anzeigeinformation zu empfangen, die gemäß eines zweiten vorbestimmten Codes codiert ist, wobei der zweite Code von dem spezifischen Code unterschieden werden kann.

**Revendications**

**1.** Dispositif de traitement de signaux (50) comprenant :

un premier port de données (40) pour la communication avec une caisse enregistreuse (10) ;
un deuxième port de données (60) pour la communication avec une disposition d'affichage (70) ;
un troisième port de données (80) pour la communication avec un dispositif de traitement de paiement (90) adapté pour recevoir et évaluer des moyens de paiement, tels que des billets de banque et des pièces de monnaie, et pour fournir la quantité de monnaie correcte ;
des moyens (270 ; 300) pour recevoir un premier message au niveau du premier port de données ; ledit premier message comprenant du texte et/ou des chiffres, comme les informations sur le prix, la désignation des marchandises et le nombre d'articles des marchandises ;
des moyens de commande (270 ; 370) pour générer un deuxième message concernant un montant de paiement demandé (Ba) comme fonction du premier message ;
des moyens (270 ; 320) pour transmettre le deuxième message d'une manière prédéterminée au deuxième port de données pour la communication avec ladite disposition d'affichage (70) ;
des moyens (270 ; 290 ; 360) pour recevoir un troisième message sur le troisième port de données (80) ; ledit troisième message comprenant des informations concernant un montant de paiement offert (Bi) ;
des moyens (270 ; 290 ; 370) pour générer une quantité d'informations (380) comme fonction du contenu des deuxième et troisième messages (Ba ; Bi) ;
les moyens de commande (270 ; 370) fonctionnant pour délivrer la quantité d'informations générée (380) au deuxième port de données (60) pour la communication avec ladite disposition d'affichage (70) ; et
un premier moyen formant mémoire (240) pour stocker une routine de programme informatique sélectionnable (250, 260,...), dans lequel les moyens de commande comprennent une unité de traitement (270) configurée pour fonctionner selon la routine de programme informatique (250, 260, ...), dans lesquels la routine de programme informatique fait que l'unité de traitement (270) interprète les premiers messages conformément à un code spécifique.

**2.** Dispositif de traitement de signaux (50) selon la revendication 1, **caractérisé en ce que**
les moyens de commande fonctionnent pour calculer une première valeur numérique (Ba) en réponse aux premiers messages ou dans lesquels un des premiers messages est une première valeur numérique (Ba) qui est le résultat d'un calcul en réponse aux premiers messages précédents ;
les moyens de commande fonctionnent pour émettre un signal de demande sur le troisième port de données (80) en réponse à la détection d'un premier message (310) indiquant la fin d'un flot de premiers messages ; et dans lequel

les moyens de contrôle fonctionnent pour attendre ledit troisième message après avoir émis le signal de demande.

3. Dispositif de traitement de signaux selon la revendication 2, dans lequel

les moyens de commande, lors de la réception du troisième message incluant une seconde valeur numérique (Bi), fonctionnent pour calculer une différence (D) entre la seconde valeur numérique (Bi) et la première valeur numérique (Ba).

4. Dispositif de traitement de signaux (50) selon la revendication 3, dans lequel :

les moyens de commande fonctionnent pour effectuer une phase de vérification incluant une comparaison de la différence (D) avec une valeur prédéterminée (K) de sorte que si les critères de vérification ont été satisfaits, les moyens de commande émettent un signal de poursuite au troisième port de données (80).

5. Dispositif de traitement de signaux (50) selon la revendication 3 ou 4, dans lequel :

les moyens de commande fonctionnent pour inclure la première valeur numérique (Ba) et la seconde valeur numérique (Bi) dans la quantité d'informations générée (380) ; et

dans lequel les moyens de commande fonctionnent pour délivrer la quantité d'informations générée (380) au deuxième port de données avant de remettre un deuxième message indiquant la fin d'un flot de deuxièmes messages.

6. Dispositif de traitement de signaux (50) selon la revendication 2, dans lequel :

les moyens de commande fonctionnent pour générer un deuxième message indiquant la fin d'un flot de deuxièmes messages en réponse au premier message indiquant la fin d'un flot de premiers messages.

7. Dispositif de traitement de signaux (50) selon la revendication 6, dans lequel :

le premier moyen formant mémoire (240) comprend une pluralité de routines de programme informatique individuellement sélectionnables (250, 260,...), une des routines de programme étant adaptée de sorte qu'en fonctionnement la routine sélectionnée fasse que l'unité informatique interprète les premiers messages conformément à un code spécifique, une autre des routines de programme étant adaptée de sorte qu'en fonctionnement la routine sélectionnée fasse que l'unité informatique interprète les premiers messages conformément à un autre code spécifique.

8. Système comprenant :

un dispositif de traitement de signaux (50) selon l'une quelconque des revendications 1 à 7 ; une caisse enregistreuse (10) couplée de manière communicative au dit premier port de données (40) ; une disposition d'affichage (70) couplée de manière communicative au dit deuxième port de données (60) ; un dispositif de traitement de paiement (90) couplé de manière communicative au dit troisième port de données (80).

9. Système selon la revendication 8, dans lequel le dispositif de traitement de signaux (50) constitue une unité individuelle qui est physiquement séparée de ladite caisse enregistreuse (10), de ladite disposition d'affichage (70) et dudit dispositif de traitement de paiement (90).

10. Système selon la revendication 8, dans lequel le dispositif de traitement de signaux (50) est une partie intégrée de la caisse enregistreuse (10).

11. Système selon la revendication 8, dans lequel le dispositif de traitement de signaux (50) est une partie intégrée de ladite disposition d'affichage (70).

12. Système selon la revendication 8, dans lequel le dispositif de traitement de signaux (50) est une partie intégrée dudit dispositif de traitement de paiement (90).

13. Système pour le traitement de moyens de paiement, comprenant :

une unité d'entrée de données (10, 20) pour l'entrée d'une première quantité de données, à partir de laquelle une quantité de données première valeur numérique (Ba) représentant un montant demandé peut être calculée, l'unité d'entrée de données (10, 20) étant disposée pour fournir la première quantité de données selon un code spécifique ; un dispositif de traitement de paiement (90) comprenant un élément de stockage (200) qui est utilisé pour stocker des moyens de paiement, tels que des billets de banque et des pièces de monnaie, ledit dispositif de traitement de paiement (90) comprenant :

au moins une unité d'entrée (210) pour introduire des moyens de paiement dans l'élément de stockage (200), l'unité d'entrée comprenant un moyen de détection pour générer une seconde valeur numérique (Bi) comme fonction des moyens de paiement qui sont introduits ; et
au moins une unité de distribution (220) pour distribuer des moyens de paiement à partir de l'élément de stockage (200) ; et

un dispositif de traitement de signaux (50) qui est disposé pour générer un signal de distribution comme fonction de la première valeur numérique (Ba) et la seconde valeur numérique (Bi) ; dans lequel
ledit dispositif de traitement de paiement (90) est fonctionnellement connecté à l'unité d'entrée de données (10, 20) via ledit dispositif de traitement de signaux (50) ; et
l'unité de distribution (220) est disposée pour distribuer des moyens de paiement à partir de l'élément de stockage (200) comme fonction dudit signal de distribution ;
le dispositif de traitement de signaux (50) comprenant :

un premier élément de mémoire (240) dans lequel au moins une routine de programme informatique sélectionnable (250, 260) est stockée ; et
une unité informatique (270) qui est disposée pour fonctionner conformément à une routine de programme sélectionnée, la routine de programme sélectionnée étant adaptée afin de faire que l'unité informatique interprète la première quantité de données conformément au dit code spécifique.

14. Système selon la revendication 13, lequel système comprend une disposition d'affichage (70) qui est fonctionnellement connectée aux moyens de contrôle et est utilisée pour afficher une seconde quantité de données.

15. Système selon la revendication 14, dans lequel l'unité informatique est disposée pour générer la seconde quantité de données comme fonction de la première quantité de données.

16. Système selon la revendication 14, dans lequel l'élément de stockage comprend une unité de traitement de données qui comprend une unité de surveillance d'état pour générer un signal d'état indiquant l'état de l'élément de stockage ; et l'unité de traitement de données est disposée pour générer la seconde quantité de données comme fonction du signal d'état.

17. Système selon l'une quelconque des revendications 14, 15 et 16, dans lequel la disposition d'affichage est disposée pour recevoir des informations d'affichage codées selon un second code prédéterminé, lequel second code peu t être différencié dudit code spécifique.

CASH REGISTER

RECEIPT PRINTER

PAYMENT-
PROCESSING
DEVICE

FIG.1
PRIOR ART

10

30

20

50

40    60

80

70

65

75    90

100

FIG.2

FIG. 3

FIG.4

FIG. 5

FIG.6

FIG.7

FIG.8

FIG.10

FIG.9